# EUROPEAN PATENT APPLICATION

(11) **EP 4 749 441 A1**
(43) Date of publication of application: **27.05.2026**
(21) Application number: 24842332.9
(22) Date of filing: 12.07.2024
(51) Int. Cl.: G06F 9/451, H04L 65/60

(54) **MEDIA CONTENT PRESENTATION METHOD AND APPARATUS, AND DEVICE, READABLE STORAGE MEDIUM AND PRODUCT**

(30) Priority: 17.07.2023 CN 202310879259
(71) Applicant: Beijing Zitiao Network Technology Co., Ltd., Beijing 100190 (CN)
(72) Inventor: ZHAO, Jiarui, Beijing 100028 (CN); SONG, Wen, Beijing 100028 (CN); WANG, You, Beijing 100028 (CN)
(74) Representative: Isarpatent
(86) International application number: PCT/CN2024/105360
(87) International publication number: WO 2025/016339

(57) **Abstract**

Embodiments of the present disclosure provide a method and apparatus, device, a readable storage medium and a product, and the method includes: presenting a preset media content in a media content presentation page; obtaining first media content in response to a switching operation triggered by a user in the media content presentation page, wherein the first media content is associated with a target object; and presenting the first media content in accordance with a target style in the media contentpresentation page, wherein the target style is determined based on the target object, and the media content of a same type corresponds to different presentation styles. So that presentation content in the media content presentation page can be enriched. In addition, richer associated content of the target object can be presented in the media content presentation page, causing a user to view the target object based on the first media content.

## Description

This application claims the benefit of Chinese Patent Application No. 2023108792597, filed on July 17, 2023, entitled "METHOD, APPARATUS, DEVICE, READABLE STORAGE MEDIUM, AND PRODUCT FOR MEDIA CONTENT PRESENTATION", which is hereby incorporated herein by reference in its entirety.

### FIELD

Embodiments of the present disclosure relate to the technical field of interface interaction, in particular to a method, apparatus, device, readable storage medium and product for media content presentation.

### BACKGROUND

With development of Internet technologies, more and more Internet applications support a user to generate and post media content. The user may also browse media content on the Internet application.

However, current media content is generally generated based on video content captured by the user or image-text content generated by the user, and a limited amount of presentation content is often present in the media content, and interactive operations based on the media content are also relatively monotonous.

### SUMMARY

Embodiments of the present disclosure provide a method, apparatus, device, readable storage medium and product for media content presentation, configured to solve a technical problem that the presentation content and interaction manner of existing content presentation methods are relatively monotonous.

According to a first aspect, embodiments of the present disclosure provide a method for media content presentation, including: presenting preset media content in a media content presentation page; obtaining first media content in response to a switching operation triggered by a user in the media content presentation page, wherein the first media content is associated with a target object; and presenting the first media content in accordance with a target style in the media content presentation page, wherein the target style is determined based on the target object, and the media content of a same type corresponds to different presentation styles.

According to a second aspect, embodiments of the present disclosure provide an apparatus for media content presentation, including: a presenting module configured to present preset media content in a media content presentation page; an obtaining module configured to obtain first media content in response to a switching operation triggered by a user in the media content presentation page, wherein the first media content is associated with a target object; and a processing module configured to present the first media content in accordance with a target style in the media content presentation page, wherein the target style is determined based on the target object, and the media content of a same type corresponds to different presentation styles.

According to a third aspect, embodiments of the present disclosure provide an electronic device, including: a processor and a memory; the memory storing computer executable instructions; and the processor executing the computer executable instruction stored in the memory, causing at least one processor to perform the method for media content presentation according to the first aspect and various possible designs of the first aspect.

According to a fourth aspect, embodiments of the present disclosure provide a computer readable storage medium, storing computer executable instructions which, when executed by a processor, cause the processor to perform the method for media content presentation according to the first aspect and various possible designs of the first aspect.

According to a fifth aspect, embodiments of the present disclosure provide a computer program product, including a computer program which, when executed by a processor, cause the processor to perform the method for media content presentation according to the first aspect and various possible designs of the first aspect.

### BRIEF DESCRIPTION OF DRAWINGS

In order to more clearly illustrate the technical solutions in embodiments of the present disclosure, drawings used in the description of embodiments will be briefly introduced below, it is obvious that the drawings in the following description are some embodiments of the present disclosure, and for those skilled in the art, other drawings may be obtained according to these drawings without creative efforts.
FIG. 1 is a schematic flowchart of a method for media content presentation provided by embodiments of the present disclosure;
FIG. 2 is a schematic diagram of interface interaction provided by embodiments of the present disclosure;
FIG. 3 is a schematic diagram of another interface interaction provided by embodiments of the present disclosure;
FIG. 4 is a schematic diagram of a display interface provided by embodiments of the present disclosure;
FIG. 5 is a schematic structural diagram of an apparatus for media content presentation provided by embodiments of the present disclosure;
FIG. 6 is a schematic structural diagram of an electronic device provided by embodiments of the present disclosure.

### DETAILED DESCRIPTION

In order to make objectives, technical solutions and advantages of embodiments of the present disclosure clearer, the technical solutions in embodiments of the present disclosure will be clearly and completely described below with reference to the drawings in embodiments of the present disclosure. All other embodiments obtained by those of ordinary skill in the art without creative efforts shall fall within the scope of the present disclosure.

It may be understood that, before the technical solutions disclosed in embodiments of the present disclosure are used, types of personal information related to the present disclosure, usage scope, usage scenario and the like should be notified to a user in an appropriate manner according to relevant laws and regulations and obtain authorization of the user.

For example, in response to receiving an active request from a user, prompt information is sent to the user to explicitly prompt the user that the requested operation will need to acquire and use the personal information of the user. Therefore, the user may autonomously select whether to provide personal information to software or hardware executing the operation of the technical solution of the present disclosure according to the prompt information.

As an optional but non-limiting implementation, in response to receiving an active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide the personal information to an electronic device.

It may be understood that the above notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

In order to solve the technical problem that the presentation content and interaction manner of existing content presentation methods are relatively monotonous, the present disclosure provides a method, apparatus, device, readable storage medium and product for media content presentation.

It should be noted that the method, apparatus, device, readable storage medium, and product for media content presentation provided by the present disclosure may be applied to any application scenario for presenting media content associated with a target object.

The current media content presentation page generally only shows video media content posted by the user. Often, the presentation content is relatively monotonous, and the user can only perform interaction operations of like, comment and favorite based on the video media content, and the interaction manner is relatively monotonous, resulting in poor user experience.

In order to present more diversified media content in the media content presentation page, and enrich the interaction manner in the media content presentation page, first media content may be generated based on the target object. The target object includes a target point of interest and/or a target item. A target style based on the target object is determined, and the first media content in the media content presentation page in accordance with the target style is presented. Thus, the user can browse associated content of the target object in the media content presentation page. In addition, with the first media content being presented in the target style, presentation effect and the presentation content in the media content presentation page can be enriched.

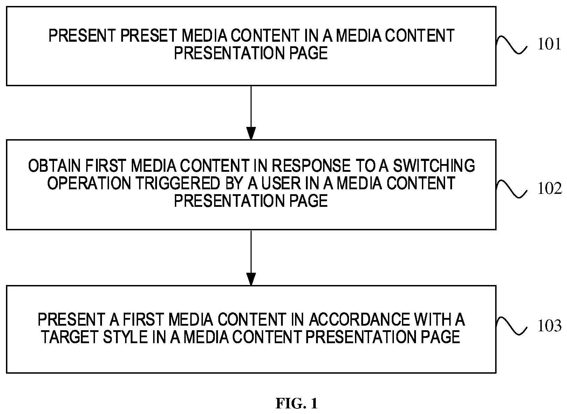

FIG. 1 is a schematic flowchart of a method for media content presentation provided by embodiments of the present disclosure. The method includes the following steps.

Step 101, Present preset media content in a media content presentation page.

The execution body of the embodiments is an apparatus for media content presentation. The apparatus for media content presentation may be coupled to the terminal device, so that the presentation of the media content can be implemented based on the human-computer interaction operation between the user and the terminal device. Alternatively, the apparatus for media content presentation may also be coupled to a server communicatively connected to a terminal device, to perform data processing based on an instruction sent by the terminal device, and control the terminal device to present media content.

In some embodiments, the user may browse a media content stream in the media content presentation page. The media content stream includes a plurality of preset media contents. The user may switch preset media content currently presented in the media content presentation page according to actual requirements, to implement browsing operations on different media content.

Step 102, Obtain first media content in response to a switching operation triggered by a user in the media content presentation page, wherein the first media content is associated with a target object.

In some embodiments, the user may trigger a switching operation of the media content by a sliding operation in a preset direction. For example, the user may switch the media content by an operation of sliding up and an operation of sliding down. Alternatively, the user may also switch the media content by an operation of sliding left and sliding right, which is not limited in the present disclosure.

Optionally, the media content stream may include preset first media content. In response to a switching operation triggered by the user in the media content presentation page, the first media content in the media content stream may be obtained, wherein the first media content is associated with the target object.

The target object includes a target item and/or a target point of interest. Correspondingly, the first media content may be media content generated based on content such as image content, object information, and evaluation information associated with the target object.

For example, in practical applications, a poster may generate the evaluation content for the target point of interest, wherein the evaluation content includes at least one picture of the target point of interest captured by the poster, evaluation text posted by the poster, and evaluation content of the poster for the target point of interest. When the poster posts the evaluation content, the display interface may include a preset media content generation control. In response to a trigger operation of the poster on the media content generation control, the first media content may be generated based on the evaluation content. Correspondingly, the first media content may include a picture associated with the target point of interest, an evaluation text, and an evaluation control of the poster for the target point of interest.

Step 103, Present the first media content in accordance with a target style in the media content presentation page, wherein the target style is determined based on the target object, and the media content of a same type corresponds to different presentation styles.

In some embodiments, after obtaining the first media content, in order to enrich presentation content in the media content presentation page, the target style may be determined based on the target object. Optionally, for different target objects such as the target item and the target point of interest, presentation of media content of a same type may be performed in different presentation styles.

Optionally, after the target style is determined, the first media content may be presented in the media content presentation page in accordance with the target style.

For example, when the target object is the target item, attribute information, image content, and the like associated with the target item may be presented in the media content presentation page. When the target object is the target point of interest, the picture of the target point of interest, the evaluation content and the evaluation content posted by the poster based on the target point of interest, and the like may be presented in the media content presentation page.

Optionally, based on any one of the above embodiments, a type of the preset media content includes an image-text type, the media content of the image-text type includes an image set, and the image set includes a plurality of pictures and/or video segments.

In some embodiments, the type of preset media content includes the image-text type. The media content of the image-text type may include the image set. There may be a plurality of images in the image set. The content type in the image set includes, but is not limited to, a picture type and a video type.

In some embodiments, the type of preset media content may also be a type of media content such as the video type or a text type.

For example, in practical applications, first media content of the image-text type may include a plurality of image contents in the image set corresponding to the target point of interest. The user may switch and view different pictures by a sliding operation in the preset direction. For example, the user may switch and view different pictures in the first media content by an operation of sliding left or sliding right.

Further, on the basis of any one of the above embodiments, step 103 includes:
presenting the image content in the media content presentation page;
presenting, in a first display area in the media content presentation page, at least one trigger control associated with the target object.

In some embodiments, after the target style is determined, the image content may be presented in the media content presentation page. At least one trigger control associated with the target object is presented in the first display area in the media content presentation page. In order to avoid blocking the image content by the trigger control, the first display area may be a lower area of the media content presentation page.

Optionally, the trigger control includes, but is not limited to, a redirect control associated with the target object, and an evaluation control associated with the target object.

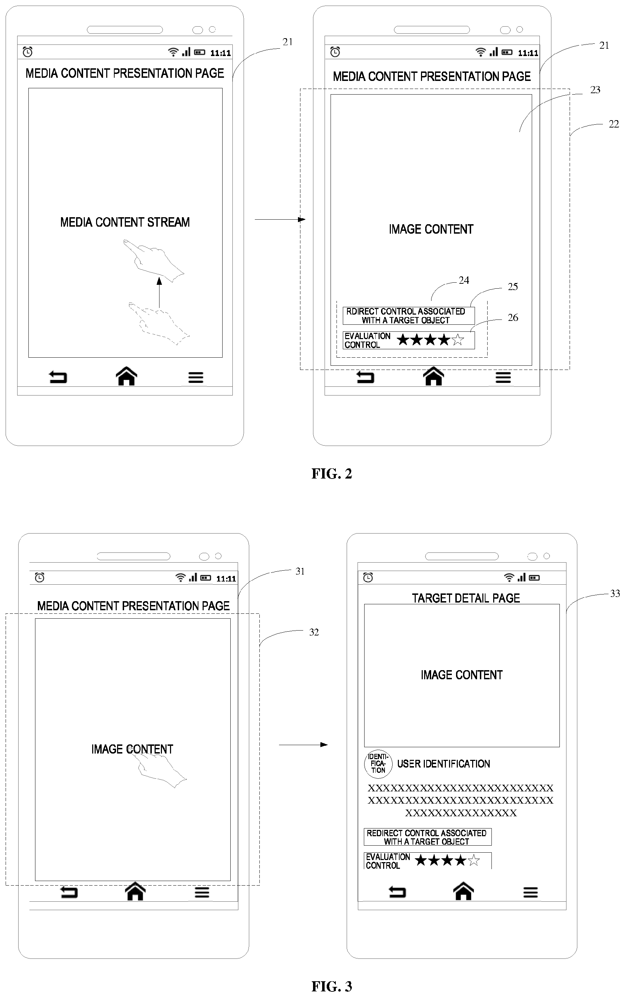

FIG. 2 is a schematic diagram of interface interaction provided by embodiments of the present disclosure. As shown in FIG. 2, the user may browse a media content stream in a media content presentation page 21. In response to a switching operation triggered by the user, first media content 22 associated with the target object may be obtained, and the first media content 22 is presented in accordance with the target style determined based on the target object. Image content 23 associated with the target object may be presented in the media content presentation page 21, for example, the image 23 is a picture or a piece of video in the image set of the first media content 22, and at least one trigger control 24 associated with the target object is presented in the first display area in the media content presentation page 21. The trigger control 24 includes, but is not limited to, a redirect control 25 associated with the target object and an evaluation control 26 associated with the target object. It may be understood that the media content presentation page 21 may also present text information of the first media content, for example, introduction information of the target object.

In some embodiments, when the image set of the first media content includes a plurality of images and/or video segments, in order to make the user more intuitively determine the currently browsed image, the media content presentation page may further present a preset image-text progress bar. The image-text progress bar may be formed by a plurality of progress bars in one-to-one correspondence with the plurality of images and/or video segments. The user may implement switching of the presented content by sliding a picture and/or the video segment.

According to the method for media content presentation provided by the embodiments, the first media content associated with the target object is obtained in response to the switching operation triggered by the user in the media content presentation page, and the first media content is presented in the media content presentation page in accordance with the target style associated with the target object, thereby enriching presentation content in the media content presentation page. In addition, richer associated content of the target object can be presented in the media content presentation page, so that the user can view the target object based on the first media content.

Optionally, the target object includes a target point of interest and/or a target item.

In some embodiments, the target object includes evaluation content generated by a poster based on the target point of interest and/or the target item, or the target object includes the target item.

The first media content is generated based on the evaluation content or image content, object information, evaluation information in the target item, and a first trigger control associated with the target point of interest or the target item.

Optionally, the first trigger control may be a redirect control corresponding to the target point of interest and/or the target item. In response to a trigger operation of the user for the first trigger control, a first information presentation page associated with the target point of interest or the target item may be presented, and associated content of the target point of interest or the target item is presented in the first information presentation page.

Optionally, after the evaluation information associated with the target object is presented in the media content presentation page, the user may further trigger an operation on the evaluation information. In response to the trigger operation of the user for the evaluation information, the first information presentation page associated with the target interest point or the target item is presented, and the associated content of the target interest point or the target item is presented in the first information presentation page. Alternatively, the first information presentation page associated with the target interest point or the target item is presented in response to the trigger operation of the user for the evaluation information, and the evaluation information associated with the first media content is located and presented in the first information presentation page.

Optionally, the first information presentation page is presented on an upper layer of the media content presentation page, and a display size of the first information presentation page is smaller than a display size of the media content presentation page.

In some embodiments, the target object includes the target item; and the first media content is generated based on image content associated with the target item, a second trigger control associated with the target item and attribute information of the target item. The image content associated with the target item may be a placard of the target item or an image generated based on the evaluation content corresponding to the target item. For example, the attribute information of the target item may be information such as the price of a commodity and a commodity introduction.

The image content may be presented in the media content presentation page, and the attribute information associated with the target item may be presented in the first display area of the media content presentation page. The second trigger control is presented in a display area associated with the target item in the image content.

Optionally, the second trigger control may be a redirect control of the target item. In response to the trigger operation of the user for the second trigger control, a second information presentation page associated with the target item may be redirected to, and the associated content of the target item is presented in the second information presentation page. Alternatively, the user may also view the associated content of the target object by triggering the image content associated with the target object. When the image content is the placard of the target item, in response to a trigger operation of the user for the image content, the second information presentation page associated with the target item is displayed and the associated content of the target item is presented in the second information presentation page. When the image content is an image generated based on the evaluation content of the target item, in response to a trigger operation of the user for the image content, the second information presentation page associated with the target item is presented and the evaluation information in the image content is located and presented in the second information presentation page.

According to the method for media content presentation provided by embodiments, for different target objects, the first media content is presented in the target style associated with the target object, and the presentation of various information is performed based on the trigger operation of the user, so that a presentation style in the media content presentation page can be enriched, an interaction manner based on the first media content can be enriched, and user experience is improved.

Further, on the basis of any one of the above embodiments, the method further includes:
switching, in response to a preset switching operation, from the media content presentation page to a target detail page, and presenting the first media content in a second target style in the target detail page, the second target style being determined based on the target object.

In some embodiments, the user may trigger the preset switching operation in the media content presentation page. The preset switching operation may be an operation of sliding up at the bottom end of the media content presentation page. Alternatively, the preset switching operation may be a trigger operation for object information associated with the first media content, which is not limited in the present disclosure.

In response to the preset switching operation triggered by the user, the media content presentation page may be switched to the target detail page. The first media content is presented in a second target style in the target detail page, the second target style being determined based on the target object.

For example, in practical applications, the target object may be the target point of interest. The first media content may be media content generated based on the evaluation content posted by the poster for the target point of interest. In the target detail page, at least one picture of the target interest point captured by the poster may be displayed in a first display area. Identification information of the poster and evaluation of the poster for the target interest point may be displayed in a second display area. The evaluation content posted by the poster for the target point of interest and a redirect control corresponding to the target point of interest may be displayed in a third display area. The first display area, the second display area, and the third display area may be arranged from top to bottom. Alternatively, the user may adjust display parameters such as display positions and display sizes of the first display area, the second display area, and the third display area according to actual requirements, which is not limited in the present disclosure.

FIG. 3 is schematic diagram of another interface interaction provided by embodiments of the present disclosure. As shown in FIG. 3, first media content 32 may be displayed in accordance with a target style determined based on the target object in a media content presentation page 31. In response to a preset switching operation triggered by the user, for example, a single-click on an expansion control (not shown) or a single-click on an image area, the media content presentation page 31 is switched to a target detail page 33. In the target detail page 33, the first media content may be presented in a second target style.

According to the method for media content presentation provided by embodiments, the media content presentation page is switched to the target detail page in response to the preset switching operation, so that the user can browse more content associated with the target object in the target detail page, and the user experience is improved. In addition, the first media content is presented in the second target style in the target detail page, so that the presentation content in the presentation page can be further enriched.

Further, on the basis of any one of the above embodiments, step 102 includes:
obtaining the first media content in a preset media content stream, determining that the first media content is media content of a preset type and determining whether the first media content is associated with a preset target object.

In some embodiments, the media content stream may include a plurality of pieces of media content. Some media content has an association relationship with the target object, and some media content does not have an association relationship with the target object. Different pieces of media content may be presented in different presentation styles.

Further, in response to a switching operation triggered by the user, first media content in the preset media content stream may be obtained. In order to determine a current presentation style, it may also be determined that the first media content is a preset type of media content and whether the first media content is associated with the preset target object. The media content of the preset type includes media content of an image-text type.

Further, on the basis of any one of the above embodiments, the method further includes:
determining to present the first media content in accordance with a default style in the media content presentation page after determining that the first media content is media content of the preset type and the first media content is not associated with any preset target object, and/or
determining to present the first media content in accordance with a target style in the media content presentation page after determining that the first media content is media content of the preset type and the first media content is associated with the preset target object, the target style being determined based on a type of the target object.

In some embodiments, for currently obtained first media content, if it is determined that the first media content is the preset type of media content and the first media content is not associated with any preset target object, or if it is determined that the first media content is other types of media content and the first media content is not associated with any preset target object, it may be determined that current presentation style is a default style. The first media content may be presented in the default style. The default style may be presenting image and/or video content in the first media content in full screen, and presenting text content in the first media content on the lower side of the media content presentation page.

Optionally, for the currently obtained first media content, if it is determined that the first media content is the preset type of media content and the first media content is associated with the preset target object, it may be determined that the current presentation style is the target style determined based on the target object. The first media content may be presented in accordance with the target style in the media content presentation page.

According to the method for media content presentation provided by embodiments, after the first media content is obtained, the first media content is presented in different presentation styles based on the association relationship between the first media content and the target object, so that presentation effect in the media content presentation page can be further enriched, and the user experience is improved.

Further, on the basis of any one of the above embodiments, the method includes:
adding structured information associated with the target object in the media content presentation page and/or the target detail page.

In some embodiments, in order to enrich the presentation content in the media content presentation page, the structured information associated with the target object may also be added in the media content presentation page and/or the target detail page. The structured information includes, but is not limited to, a redirect control associated with the target object, evaluation content associated with the target object, and the like.

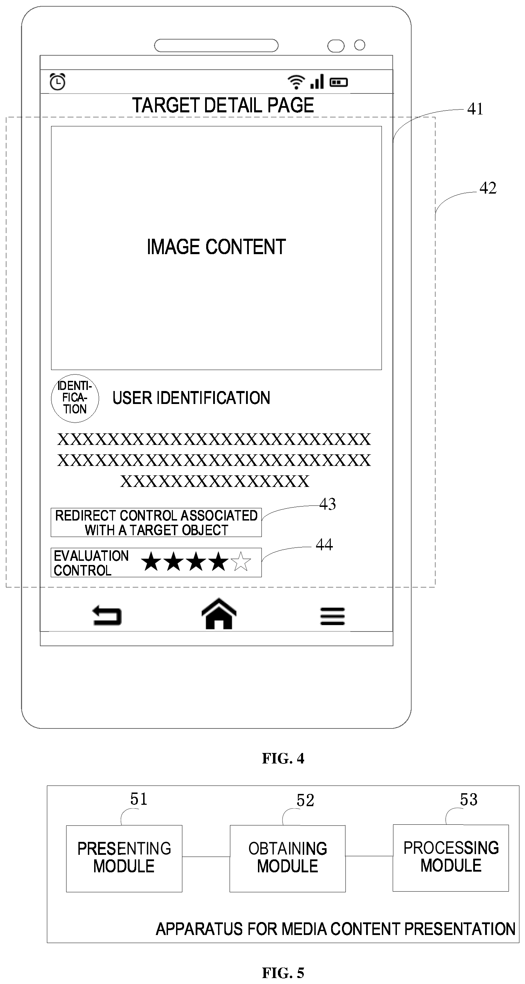

FIG. 4 is a schematic diagram of a display interface provided by embodiments of the present disclosure. As shown in FIG. 4, first media content 42 may be displayed in accordance with the second target style in a target detail page 41. In addition, the target detail page 41 may display structured information associated with the target object. The structured information includes information such as a redirect control 43 associated with the target object, an evaluation control 44 associated with the target object, and the like. It may be understood that the target detail page includes a page configured to present the first media content, that is, the target detail page is a page that is different from the detail page of the target object.

According to the method for media content presentation provided by embodiments, the structured information associated with the target object is added in the media content presentation page and/or the target detail page, so that richer association content of the target object can be presented in the media content presentation page and/or the target detail page, so that the user can browse more content associated with the target object in the media content presentation page and/or the target detail page, and the user experience is improved.

FIG. 5 is a schematic structural diagram of an apparatus for media content presentation provided by embodiments of the present disclosure. As shown in FIG. 5, the apparatus includes a presenting module 51, an obtaining module 52 and a processing module 53. The presenting module 51 is configured to present preset media content in a media content presentation page. An obtaining module 52 is configured to obtain first media content in response to a switching operation triggered by a user in the media content presentation page, wherein the first media content is associated with a target object. The processing module 53 is configured to present the first media content in accordance with a target style in the media content presentation page, wherein the target style is determined based on the target object, and the media content of a same type corresponds to different presentation styles.

Further, on the basis of any one of the above embodiments, a type of the preset media content includes an image-text type. The media content of the image-text type includes an image set, and the image set includes a plurality of pictures and/or video segments.

Further, on the basis of any one of the above embodiments, the processing module is configured to display the image content in the media content presentation page. At least one trigger control associated with the target object in the first display area in the media content presentation page.

Further, on the basis of any one of the above embodiments, the apparatus further includes: a switching module, configured to switch, in response to a preset switching operation, from the media content presentation page to a target detail page, and present the first media content in a second target style in the target detail page, the second target style being determined based on the target object.

Further, on the basis of any one of the above embodiments, the obtaining module is configured to: obtain the first media content in a preset media content stream, and determine that the first media content is media content of a preset type and determine whether the first media content is associated with a preset target object.

Further, on the basis of any one of the above embodiments, the apparatus further includes: a presentation module, configured to determine to present the first media content in accordance with a default style in the media content presentation page after determining that the first media content is media content of the preset type and the first media content is not associated with any preset target object, and/or the presentation module is further configured to determine to present the first media content in accordance with a target style in the media content presentation page after determining that the first media content is media content of the preset type and the first media content is associated with the preset target object, the target style being determined based on a type of the target object.

Further, on the basis of any one of the above embodiments, the apparatus includes: a presenting module, configured to add structured information associated with the target object in the media content presentation page and/or the target detail page.

Further, on the basis of any one of the above embodiments, the target object includes a target point of interest and/or a target item.

The apparatus provided in this embodiment may be configured to perform the technical solutions in the above method embodiments, and implementation principles and technical effects thereof are similar, and details are not described herein again in this embodiment.

In order to implement the above embodiments, embodiments of the present disclosure further provide an electronic device, including: a processor and a memory.

The memory stores computer executable instructions.

The processor executes the computer executable instructions stored in the memory, causing the processor to perform the method for media content presentation according to any one of the above embodiments.

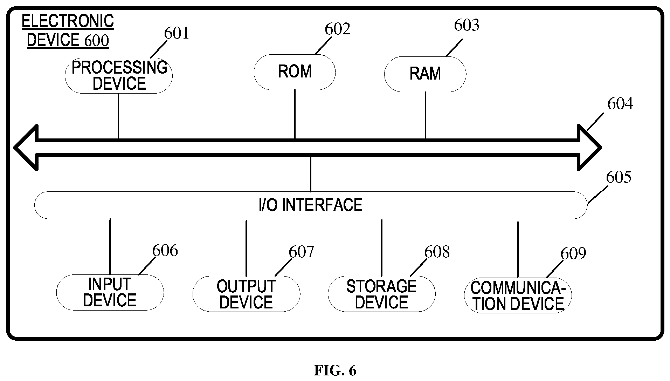

FIG. 6 is a schematic structural diagram of an electronic device provided by embodiments of the present disclosure. As shown in FIG. 6, the electronic device 600 may be a terminal device or a server. In some embodiments, the terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 6 is merely an example, and should not impose any limitation on the functions and scope of use of the embodiments of the present disclosure.

As shown in FIG. 6, the electronic device 600 may include a processing device (for example, a central processing unit, a graphics processor, etc.) 601, which may perform various appropriate actions and processing according to a program stored in a read only memory (ROM) 602 or a program loaded into a random access memory (RAM) 603 from a storage device 608. In the RAM 603, various programs and data required by the operation of the electronic device 600 are also stored. The processing device 601, the ROM 602, and the RAM 603 are connected to each other through a bus 604. Input/output (I/O) interface 605 is also connected to bus 604.

Generally, the following devices may be connected to the I/O interface 605: an input device 606 including, for example, a touch screen, a touch pad, a keyboard, a mouse, a camera, a microphone, an accelerometer, a gyroscope, etc. ; an output device 607 including, for example, a liquid crystal display (LCD), a speaker, a vibrator, etc. ; a storage device 608 including, for example, a magnetic tape, a hard disk, etc. ; and a communication device 609. The communication device 609 may allow the electronic device 600 to communicate wirelessly or wired with other devices to exchange data. While FIG. 6 shows an electronic device 600 having various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 609, or installed from the storage device 608, or from the ROM 602. When the computer program is executed by the processing apparatus 601, the above functions defined in the method of the embodiments of the present disclosure are performed.

It should be noted that the computer readable medium described above may be a computer readable signal medium, a computer readable storage medium, or any combination of the above two. The computer readable storage medium may be, for example, but not limited to, an electrical, magnetic, optical, electromagnetic, infrared, or semiconductor system, device, or device, or any combination thereof. More specific examples of computer readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In the present disclosure, a computer readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the above. The computer readable signal medium may also be any computer readable medium other than a computer readable storage medium that may send, propagate, or transmit a program for use by or in connection with an instruction execution system, apparatus, or device. The program code embodied on the computer readable medium may be transmitted with any suitable medium, including, but not limited to: wires, optical cables, RF (radio frequency), and the like, or any suitable combination of the above.

In order to implement the above embodiments, embodiments of the present disclosure further provide a computer readable storage medium, storing computer executable instructions which, when executed by a processor, cause the processor to perform the method for media content presentation according to any one of the above embodiments.

In order to implement the above embodiments, embodiments of the present disclosure further provide a computer program product, including a computer program, where when the computer program is executed by a processor, the method for media content presentation according to any one of the above embodiments.

The computer readable medium described above may be included in the electronic device; or may be separately present without being assembled into the electronic device.

The computer readable medium carries one or more programs, and when the one or more programs are executed by the electronic device, the electronic device is enabled to perform the method shown in the above embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. In some embodiments, the name of the unit does not constitute a limitation on the unit itself in some cases, for example, the first obtaining unit may be further described as "obtaining units of at least two Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the above. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

According to a first aspect, a method for media content presentation is provided according to one or more embodiments of the present disclosure, including:
presenting preset media content in a media content presentation page;
obtaining first media content in response to a switching operation triggered by a user in the media content presentation page, wherein the first media content is associated with a target object;
presenting the first media content in accordance with a target style in the media content presentation page, wherein the target style is determined based on the target object, and the media content of a same type corresponds to different presentation styles.

According to one or more embodiments of the present disclosure, a type of the preset media content includes an image-text type, media content of the image-text type includes an image set, and the image set includes a plurality of pictures and/or video segments.

According to one or more embodiments of the present disclosure, the presenting the first media content in accordance with a target style in the media content presentation page includes:
presenting the image content in the media content presentation page;
presenting, in a first display area in the media content presentation page, at least one trigger control associated with the target object.

According to one or more embodiments of the present disclosure, the method further includes:

switching, in response to a preset switching operation, from the media content presentation page to a target detail page, and presenting the first media content in a second target style in the target detail page, the second target style being determined based on the target object.

According to one or more embodiments of the present disclosure, obtaining the first media content includes:
obtaining the first media content in a preset media content stream, determining that the first media content is media content of a preset type and determining whether the first media content is associated with a preset target object.

According to one or more embodiments of the present disclosure, the method further includes:
determining to present the first media content in accordance with a default style in the media content presentation page after determining that the first media content is media content of the preset type and the first media content is not associated with any preset target object, and/or
determining to present the first media content in accordance with a target style in the media content presentation page after determining that the first media content is media content of the preset type and the first media content is associated with the preset target object, the target style being determined based on a type of the target object.

According to one or more embodiments of the present disclosure, the method includes:
adding structured information associated with the target object in the media content presentation page and/or the target detail page.

According to one or more embodiments of the present disclosure, the target object includes a target point of interest and/or a target item.

According to a second aspect, an apparatus for media content presentation is provided according to one or more embodiments of the present disclosure, including:
a presenting module configured to present preset media content in a media content presentation page;
an obtaining module configured to obtain first media content in response to a switching operation triggered by a user in the media content presentation page, wherein the first media content is associated with a target object;
a processing module configured to present the first media content in accordance with a target style in the media content presentation page, wherein the target style is determined based on the target object, and the media content of a same type corresponds to different presentation styles.

According to one or more embodiments of the present disclosure, a type of the preset media content includes an image-text type, media content of the image-text type includes an image set, and the image set includes a plurality of pictures and/or video segments.

According to one or more embodiments of the present disclosure, the processing module is configured to:
present the image content in the media content presentation page;
present, in a first display area in the media content presentation page, at least one trigger control associated with the target object.

According to one or more embodiments of the present disclosure, the apparatus further includes:
a switching module, configured to switch in response to a preset switching operation, from the media content presentation page to a target detail page and present the first media content in a second target style in the target detail page, the second target style being determined based on the target object.

According to one or more embodiments of the present disclosure, the obtaining module is configured to:
obtain the first media content in a preset media content stream, and determine that the first media content is media content of a preset type and determine whether the first media content is associated with a preset target object.

According to one or more embodiments of the present disclosure, the apparatus further includes:
a presenting module, configured to: determine to present the first media content in accordance with a default style in the media content presentation page after determining that the first media content is media content of the preset type and the first media content is not associated with any preset target object, and/or

The presenting module is further configured to determine to present the first media content in accordance with a target style in the media content presentation page after determining that the first media content is media content of the preset type and the first media content is associated with a preset target object, the target style being determined based on a type of the target object.

According to one or more embodiments of the present disclosure, the apparatus includes:
A presenting module, configured to add structured information associated with the target object in the media content presentation page and/or the target detail page.

According to one or more embodiments of the present disclosure, the target object includes a target point of interest and/or a target item.

According to a third aspect, an electronic device is provided according to one or more embodiments of the present disclosure, including: at least one processor and a memory;
the memory storing computer executable instructions;
the at least one processor executing the computer executable instructions stored in the memory, causing the at least one processor to perform the method for media content presentation according to the first aspect and various possible designs of the first aspect.

According to a fourth aspect, a computer readable storage medium is provided according to one or more embodiments of the present disclosure, storing computer executable instructions which, when executed by a processor, cause the processor to perform the method for media content presentation according to the first aspect and the possible designs of the first aspect.

According to a fifth aspect, a computer program product is provided according to one or more embodiments of the present disclosure, including a computer program which, when executed by a processor, causes the processor to perform the method for media content presentation according to the first aspect and various possible designs of the first aspect.

The above description is merely an illustration of preferred embodiments of the present disclosure and e principles of applied technology. It should be understood by those skilled in the art that the disclosure in the present disclosure is not limited to the technical solutions of specific combination of the above technical features, and should also cover other technical solutions formed by any combination of the above technical features or their equivalent features without departing from the above disclosed concept. For example, a technical solution formed by mutually replacing technical features disclosed the above features and in the present disclosure (but not limited).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for media content presentation, comprising:
presenting preset media content in a media content presentation page;
obtaining first media content in response to a switching operation triggered by a user in the media content presentation page, wherein the first media content is associated with a target object; and
presenting the first media content in accordance with a target style in the media content presentation page, wherein the target style is determined based on the target object, and the media content of a same type corresponds to different presentation styles.

2. The method according to claim 1, wherein a type of the preset media content comprises an image-text type, media content of the image-text type comprises an image set, and the image set comprises a plurality of pictures and/or video segments.

3. The method according to claim 2, wherein presenting the first media content in accordance with the target style in the media content presentation page comprises:
presenting the image content in the media content presentation page; and
presenting, in a first display area in the media content presentation page, at least one trigger control associated with the target object.

4. The method according to claim 1, further comprising:
switching, in response to a preset switching operation, from the media content presentation page to a target detail page and presenting the first media content in a second target style in the target detail page, the second target style being determined based on the target object.

5. The method according to claim 1, wherein obtaining the first media content comprises:
obtaining the first media content in a preset media content stream, determining that the first media content is media content of a preset type and determining whether the first media content is associated with a preset target object.

6. The method according to claim 5, further comprising:
determining to present the first media content in accordance with a default style in the media content presentation page after determining that the first media content is media content of the preset type and the first media content is not associated with any preset target object, and/or
determining to present the first media content in accordance with a target style in the media content presentation page after determining that the first media content is media content of the preset type and the first media content is associated with the preset target object, the target style being determined based on a type of the target object.

7. The method according to claim 4, wherein the method comprises:
adding structured information associated with the target object in the media content presentation page and/or the target detail page.

8. The method according to any of claims 1 to 7, wherein the target object comprises a target point of interest and/or a target item.

9. A apparatus for media content presentation, comprising:
a presenting module configured to present preset media content in a media content presentation page;
an obtaining module configured to obtain first media content in response to a switching operation triggered by a user in the media content presentation page, wherein the first media content is associated with a target object;
a processing module configured to present the first media content in accordance with a target style in the media content presentation page, wherein the target style is determined based on the target object, and the media content of a same type corresponds to different presentation styles.

10. An electronic device, comprising: a processor and a memory;
the memory storing computer executable instructions; and
the processor executing the computer executable instructions stored in the memory, causing the processor to perform the method for media content presentation according to any of claims 1 to 8.

11. A computer readable storage medium, storing computer executable instructions which, when executed by a processor, cause the processor to perform the method for media content presentation according to any of claims 1 to 8.

12. A computer program product, comprising a computer program which, when executed by a processor, causes the processor to perform the method for media content presentation according to any of claims 1 to 8.
